# EUROPÄISCHE PATENTSCHRIFT

(11) **EP 1 813 808 B1**
(45) Veröffentlichungstag und Bekanntmachung des Hinweises auf die Patenterteilung: **12.01.2011**
(21) Anmeldenummer: 07001670.4
(22) Anmeldetag: 26.01.2007
(51) Int. Cl.: F03D 11/04

(54) **Turm einer Windkraftanlage**
Wind turbine tower
Tour d'éolienne

(30) Priorität: 31.01.2006 DE 102006004640
(43) Veröffentlichungstag der Anmeldung: 01.08.2007
(73) Patentinhaber: REpower Systems AG, 22297 Hamburg (DE)
(72) Erfinder: Seidel, Marc, 49090 Osnabrück (DE); Winkler, Andreas, 24783 Osterrönfeld (DE)
(74) Vertreter: Grebner, Christian Georg Rudolf

(56) Entgegenhaltungen:
- EP-A- 0 139 045
- EP-A- 1 013 601
- WO-A-2006/004417
- CN-Y- 2 434 386
- DE-A1- 10 339 438
- DE-A1-102004 028 253
- BALLIO G. & MAZZOLANI F. M.: "Theory and Design of Steel Structures" 1983, CHAPMAN AND HALL , LONDON , XP002509677 * Seite 43, Absatz 4 - Seite 44, Absatz 2 *

## Beschreibung

Die Erfindung betrifft einen Turm einer Windkraftanlage mit einem Unterteil in Form eines Gitterturms mit mindestens drei Eckstielen und einem Oberteil in Form eines, vorzugsweise im Wesentlichen im Querschnitt runden, Rohrturms, wobei der obere Abschlussbereich, insbesondere die Oberseite, des Unterteils mit dem unteren Anschlussbereich, insbesondere der Unterseite, des Oberteils mittels eines Übergangskörpers verbunden ist. Des weiteren betrifft die Erfindung eine Windkraftanlage sowie eine Verwendung eines Übergangskörpers in einem Turm einer Windkraftanlage.

Beispielsweise ist ein solcher Turm unter der Bezeichnung OWEC Jacket Quattropod der Firma OWEC Tower A/S bekannt.

Ein weiterer Turm einer Windenergieanlage ist in DE-B-103 39 438 beschrieben, wobei ein zwischen einem unteren Turmabschnitt mit einem Gitterturm und einem oberen Turmabschnitt mit einem Rohrturm angeordnetes Übergangsstück vorgesehen ist. Das Obergangsstück ist derart ausgebildet, dass dessen horizontale Erstreckung im unteren Bereich größer als dessen horizontale Erstreckung im oberen Bereich ist.

Die beiden Turmformen eignen sich dazu, dass Windenergieanlagen offshore, d.h. in einem Meer, errichtet werden können.

Des Weiteren ist in EP-A-0 139 045 eine Unterkonstruktion für ein Hochsilo offenbart, wobei die Unterkonstruktion Stützen aufweist, wobei im Kopfbereich der Stützen Schrägstäbe aufweist. Hierbei wird das Hochsilo auf den Stützen angeordnet.

Darüber hinaus ist in CN-Y-2434386 die Gründung eines Wasserturms beschrieben ist, wobei ein Wasserbehälter auf einer Gitterkonstruktion angeordnet wird.

Das Dokument WO 2006/004417 veröffentlicht einen Überganskörper für einen zweiteiligen Turm gemäß dem Stand der Technik.

Ausgehend von diesem Stand der Technik ist es Aufgabe der vorliegenden Erfindung, einen Turm einer Windkraftanlage bereitzustellen, der beispielsweise offshore errichtet werden kann, wobei der Turm in seinem Aufbau einfach sein soll und die Errichtung des Turms zu wirtschaftlich vertretbaren Kosten realisierbar ist.

Gelöst wird diese Aufgabe bei einem Turm einer Windkraftanlage mit einem Unterteil in Form eines Gitterturms mit mindestens drei Eckstielen und einem Oberteil in Form eines, vorzugsweise im Wesentlichen im Querschnitt runden, Rohrturms, wobei der obere Abschlussbereich, insbesondere die Oberseite, des Unterteils mit dem unteren Anschlussbereich, insbesondere der Unterseite, des Oberteils mittels eines Übergangskörpers verbunden ist, dadurch, dass der Übergangskörper Verbindungsstreben zwischen dem oberen Abschlussbereich des Unterteils und dem unteren Anschlussbereich des Oberteils aufweist, wobei die Verbindungsstreben mit dem unteren Anschlussbereich des Oberteils verbunden sind und wobei die Anzahl der mit dem Oberteil verbundenen Verbindungsstreben größer als die Anzahl der dem Übergangskörper zugewandten bzw. zugeordneten Eckstiele ist.

Die Erfindung beruht auf dem Gedanken, dass der Übergang von einem Gittermast bzw. Gitterturm zu einem Rohrturm, auf dem eine Windenergieanlage bzw. eine drehbar gelagerte Maschinengondel mit einem Rotor und mit mindestens einem Rotorblatt angeordnet sind, in einem Übergangsbereich mittels des Übergangskörpers verbunden wird, wobei basierend auf den Eckstielen des Unterteils die Verbindungsstreben durch Verzweigungen bzw. Verästelungen im Bereich des Übergangskörpers zunehmen, so dass der Rohrturm auf einer Vielzahl von Verbindungsstreben platziert wird. Dadurch, dass die Anzahl der Verbindungsstreben des Übergangskörpers größer ist als die Anzahl der Eckstiele des Unterteils, kann eine zuverlässige Anordnung des Rohrturms auf den Übergangskörper erzielt werden, wobei die Verbindungsstellen zwischen den Verbindungsstreben und dem Unterteil sternförmig an der Unterseite des Rohrturms angeordnet sind. Hierdurch ergibt sich eine gute, stabile Lage bzw. Anordnung des Oberteils.

Der Erfindung liegt insbesondere die Erkenntnis zugrunde, dass ein sehr wirtschaftlicher Kraftflussübergang von einer diskontinuierlichen Gitterturmstruktur, bei der die zu übertragenden Kräfte im wesentlichen in den Eckstielen gebündelt sind, in eine kontinuierliche Schalenstruktur, wie sie ein Rohrmast darstellt, realisiert werden kann, indem die relativ grob aufgelöste diskontinuierliche Struktur des Unterteils durch eine feinere Verästelung des Übergangskörpers bzw. durch Verästelungen stufenweise in eine Struktur mit ausreichend kleiner Auflösung überführt wird, die dann in die kontinuierliche Struktur des Oberteils übergeht. Hierbei verbindet der Übergangskörper die grobe diskontinuierliche Struktur des Unterteils mit der kontinuierlichen Struktur des Oberteils.

Der Übergangskörper zeichnet sich dadurch aus, dass die Verbindungsstreben im Übergangsbereich eine größere bzw. flachere radiale Neigung (in Bezug auf die Längsachse des Turms) als die Eckstiele des Unterteils bzw. als der Rohrturm aufweisen. Mit radialer Neigung ist hier die Veränderung des Abstandes der Längsachse der Verbindungsstrebe zur Hochachse bzw. Längsachse des Turmes gemeint. Vorteilhafterweise beträgt hierbei eine Neigung der Verbindungsstreben mindestens 10° zur Turmhochachse, insbesondere mindestens 15°.

Insofern ist zwischen den Verbindungsstreben und den unterseitigen Eckstielen bzw. dem oberseitigen Rohrturm ein sprunghafter, d.h. kein kontinuierlich verlaufender, Übergang ausgebildet. Hierbei liegt die Erkenntnis zugrunde, dass im Übergangskörper ein erheblicher. Unterschied in den horizontalen Abmessungen von Unterseite des Oberteils und Oberseite des Unterteils ausgeglichen werden muss. Nur so sind Unterteil und Oberteil mit ihren unterschiedlichen Randbedingungen als Gitterstruktur bzw. Schalenstruktur im wirtschaftlichen Optimum ausführbar.

Weiterhin ist es in einer Ausgestaltung des Turms vorteilhaft, wenn der Übergangskörper wenigstens eine Fortsetzungsverbindungsstrebe aufweist, die mit einem Eckstiel des Unterteils verbunden ist. Hierbei bilden die Fortsetzungsverbindungsstreben eine Art Fortführung der Eckstiele, wobei gleichzeitig gemäß der Erfindung im Übergangsbereich weitere Verbindungsstreben sich an wenigstens einer Fortsetzungsverbindungsstrebe nach Art eines Astes bzw. Nebenastes verzweigen. Insbesondere sind alle Eckstiele des Unterteils jeweils mit einer Fortsetzungsverbindungsstrebe in einer Weiterbildung verbunden, so dass im Übergangsbereich weitere Verbindungsstreben an den Fortsetzungsverbindungstreben angeordnet sind bzw. abzweigen und mit der Unterseite des Oberteils verbunden sind.

Dazu ist weiter vorgesehen, dass wenigstens eine Querverbindungsstrebe als eine Art Nebenast oder Nebenverzweigung zwischen wenigstens einem Eckstiel oder einer Fortsetzungsverbindungsstrebe und dem unteren Anschlussbereich des Oberteils angeordnet ist. Somit ist es möglich, dass eine Fortsetzungsverbindungsstrebe als Hauptast weitere Querverbindungsstreben als tragende Nebenäste aufweist, die an der Unterseite bzw. am unteren Anschlussbereich des Oberteils mit dem Rohrturm verbunden werden bzw. sind. Alternativ kann auch die Querverbindungsstrebe direkt von dem Eckstiel abzweigen.

Bevorzugterweise sind wenigstens zwei Verbindungsstreben des Übergangskörpers nach Art einer Verzweigung zueinander angeordnet, wobei die Verbindungsstreben mit dem Oberteil verbunden sind. Damit sind die Anschlusspunkte der Verbindungsstreben an der Unterseite des Oberteils größer als die Anzahl der Eckstiele des Unterteils. Hierbei ist insbesondere an Ausführungen gedacht, bei denen sich der Eckstiel "Y"-förmig verzweigt, wobei bevorzugt noch weitere Querverbindungsstreben abzweigen, sodass sich ein Eckstiel also in 2 oder 4 oder mehr, vorzugsweise in geradzahligen Vielfachen, Verbindungsstreben verzweigt. In dieser Ausführungsform gibt es somit keine Fortsetzungsverbindungsstrebe.

Eine weitere Ausführungsform sieht vorteilhaft vor, dass wenigstens ein Eckstiel oder wenigstens eine Fortsetzungsverbindungsstrebe mit wenigstens zwei Querverbindungsstreben verbunden ist, so dass sich die Querverbindungsstreben astförmig an der Fortsetzungsverbindungsstrebe verzweigen.

Dadurch, dass die Enden der Verbindungsstreben gleichmäßig an der Unterseite bzw. dem unteren Anschlussbereich des Oberteils angeordnet sind und ferner mit dem Oberteil verbunden sind, werden gute statische Verhältnisse für den Turm insgesamt erreicht.

In einer weiteren Ausführungsform sind zwei Verbindungsstreben, insbesondere Querverbindungsstreben, miteinander verbunden, so dass die beiden Verbindungsstreben einen gemeinsamen Anschlusspunkt an der Unterseite bzw. am unteren Anschlussbereich des Oberteils aufweisen können. Durch diese Ausführung wird eine sehr gute Kraftverteilung bei minimaler Anzahl von Anschlusspunkten (Fertigungskosten) zwischen Verbindungsstreben und Oberteil ermöglicht. Außerdem wird die Konstruktion so besonders torsionssteif.

Um eine zuverlässige Verbindung des Übergangskörpers mit seinen Verbindungsstreben mit der Unterseite bzw. dem unteren Anschlussbereich des Oberteils zu gewährleisten, weisen bevorzugterweise die Verbindungsstreben jeweils an dem der Unterseite des Oberteils bzw. an dessen unterem Anschlussbereich zugewandten Ende Versteifungsrippen auf, wodurch sich ein verbesserter Kraftfluss, insbesondere für die dynamischen Ermüdungsbelastungen des Turms bzw. der Windkraftanlage ergeben.

Dabei ist es überdies günstig, wenn die Versteifungsrippen vertikal angeordnet sind und/oder in das Oberteil hineinragen, wodurch die Verbindung des Oberteils mit dem Übergangskörper verbessert wird. Insbesondere sind die Versteifungsrippen nach Art eines Rundhohlprofils hierfür ausgebildet. Durch die genannten Maßnahmen wird ein besonders günstiger Kraftfluss von der Verbindungsstrebe in das Oberteil realisiert, Spannungsüberhöhungen werden durch den weichen Übergang weitestgehend vermieden.

Außerdem ist in einer Weiterbildung vorgesehen, dass die Verbindungsstreben dieses Übergangskörpers stabförmig oder balkenförmig (z.B. auch 1-Profile) oder rohrförmig oder rippenförmig ausgebildet sind.

Darüber hinaus wird eine zuverlässige Konstruktion dadurch erreicht, dass die, insbesondere horizontale, Querschnittsfläche des Übergangskörpers sich von der Oberseite des Unterteils bzw. dem oberen Abschlussbereich zur Unterseite des Oberteils bzw. dessen unterem Anschlussbereich verjüngt.

Eine zuverlässige Anordnung und Verbindung wird erreicht, wenn das Unterteil bzw. der untere Anschlussbereich des Oberteils eine Ringplatte aufweist, an der an den entsprechenden Anschlusspunkten die Verbindungsstreben befestigt sind, d.h., dass die Verbindungsstreben mit der Ringplatte über entsprechende Verbindungen befestigt sind. In der Regel handelt es sich hierbei um Schweißverbindungen. Es ist aber auch vorteilhaft, Gussbauteile (Gusseinsatzstücke oder Gussknoten) vorzusehen, die dann außerhalb des geometrischen Übergangs mit den Verbindungsstreben und dem Oberteil verbunden (verschweißt oder verschraubt) werden.

Um den Übergang zwischen dem Unterteil und dem Oberteil auszubilden, ist der Übergangskörper unterhalb der Rotorblattspitzen angeordnet. Hierbei befindet sich, der Übergangskörper unterhalb der horizontalen Ebene, die von der Rotorblattspitze bei senkrecht nach unten stehendem Rotorblatt definiert wird. Hierdurch wird vermieden, dass die Rotorblattspitzen bei viel Wind mit der ausladenden Struktur des Übergangbereichs kollidieren können.

Ein effizienter und gleichmäßiger Kraftfluss vom runden, als Schalentragwerk ausgeführten Rohrturm bzw. Rohrkörper des Oberteils über den Übergangskörper zum eckigen Gitterturm mit dessen diskreten Lastpfaden über die Eckstiele wird erreicht, wenn oberhalb des Übergangskörpers der untere Anschlussbereich des Oberteils konisch oder kegelstumpfartig ausgebildet ist, wobei hierbei der untere Anschlussbereich nach unten sich erweiternd ausgebildet ist, so dass die Verbindungsstreben des Übergangskörpers bzw. deren Versteifungsrippen mit dem unteren Anschlussbereich des Oberteils verbunden sind.

Außerdem zeichnet sich der erfindungsgemäße Turm dadurch aus, dass der untere Anschlussbereich des Oberteils als Rohrturmbasiskörper ausgebildet ist, auf dem der Rohrkörper des Rohrturms angeordnet ist.

Hierzu ist es vorteilhaft, wenn der Rohrturm in einen Rohrkörper und einen kegelstumpfartigen Rohrturmbasiskörper untereilt ist, die z.B. mittels einer Flanschverbindung miteinander, vorzugsweise lösbar, verbunden sind. Dabei ist die Neigung des Rohrturmbasiskörpers größer als die Neigung der Außenwände des Rohrkörpers. Vorzugsweise ist die Neigung der Außenwandungen des Rohrturmbasiskörpers geringer als die Neigung der Verbindungsstreben.

Überdies ist es gemäß der Erfindung vorgesehen, dass der Rohrturm des Oberteils mindestens ein Sechstel der gesamten Turmhöhe bildet.

Die Verbindung des Übergangskörpers zu dem Oberteil kann durch eine lösbare Verbindung, bevorzugt durch einen Schraubenflansch erfolgen, der besonders bevorzugt etwas oberhalb des oberen Endes der Versteifungsrippen angeordnet ist.

Ebenso kann die Verbindung zur Oberseite des Unterteils durch eine lösbare Verbindung, insbesondere Schraubverbindung, erfolgen. Besonders bevorzugt ist hier eine Laschenverbindung zu den Eckstielen oder sonstige an sich bekannte Flanschverbindungen.

Weiterhin wird die Aufgabe gelöst durch eine Windkraftanlage, die mit einem erfindungsgemäßen, voranstehend beschriebenen Turm ausgebildet ist. Zur Vermeidung von Wiederholungen wird auf die vorangehenden Ausführungen ausdrücklich verwiesen.

Ebenso wird die Aufgabe gelöst durch eine Verwendung eines Übergangskörpers in einem Turm einer Windkraftanlage, wobei die Einzelheiten des Übergangskörpers bzw. des Turms vorangehend beschrieben sind.

Die Erfindung wird nachstehend und ohne Beschränkung des allgemeinen Erfindungsgedankens anhand der Zeichnungen näher beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Seitenansicht eines Ausschnittes eines Turms ei- ner Windkraftanlage;
- Fig. 2: eine perspektivische Ansicht eines erfindungsgemäßen Übergangskörpers;
- Fig. 3: eine perspektivische Darstellung einer weiteren Ausfüh- rungsform eines Übergangskörpers und
- Fig. 4: eine Ansicht eines erfindungsgemäßen Übergangskör- pers an einem unteren Anschlussbereich eines Rohr- turms bzw. Oberteils im Ausschnitt,
- Fig. 5: eine Seitenansicht eines Ausschnittes eines weiteren Turms einer Windkraftanlage.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

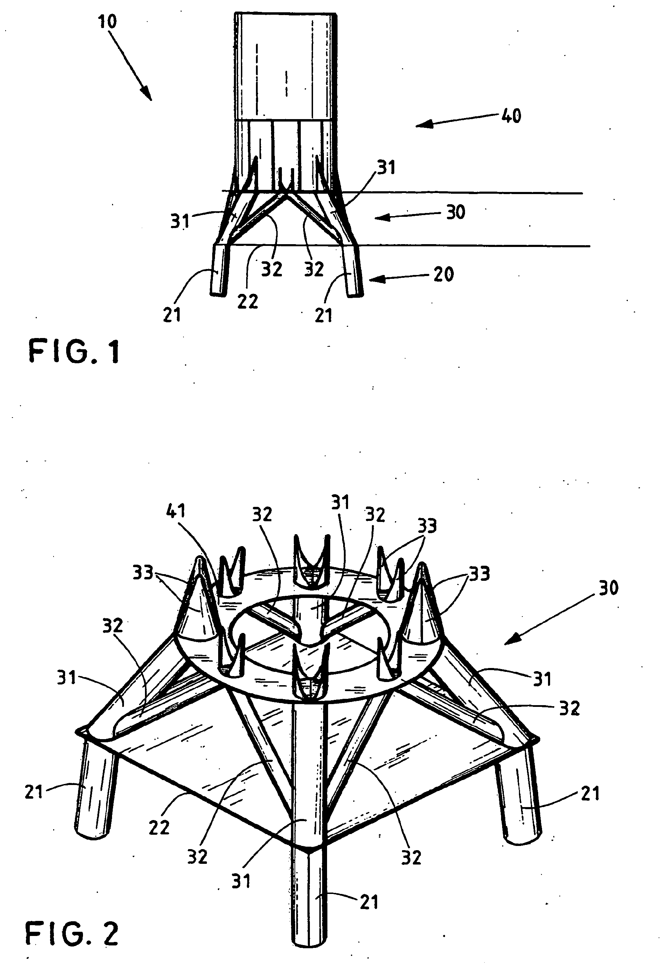

Fig. 1 zeigt in einer Seitenansicht einen Ausschnitt eines Turms 10 einer Windkraftanlage, wobei der Turm 10 aus drei Turmbausteinen im Wesentlichen besteht. Der Turm 10 weist ein Unterteil 20 in Form eines Gitterturms 20 auf, auf dem ein Übergangskörper 30 angeordnet ist. Der Übergangskörper 30 ist unterhalb eines Rohrturms 40 angeordnet. Der Übergangskörper 30 bildet somit den Übergang zwischen dem Gitterturm 20 und dem Rohrturm 40. Hierbei ist der Übergangskörper 30 mit seinen Verbindungsstreben 31, 32 sowohl fest mit den Eckstielen 21 des Gitterturms 20 als auch mit der Unterseite des Rohrturms 40 fest verbunden.

Im Rahmen der Erfindung ist es selbstverständlich, dass der Übergangskörper 30 mit dem Unterteil 20 und/oder dem Oberteil 40 mittels bekannter Befestigungsmaßnahmen verbunden ist, wobei die Verbindung lösbar ausgebildet sein kann.

Die lösbare Verbindung kann auch besonders vorteilhaft oberhalb der eingezeichneten Unterseite des Oberteils liegen, beispielsweise auf der Höhe des Farbwechsels.

Der Gitterturm 20 wird von einer Plattform 22 abgeschlossen, die mit den Eckstielen 21 verbunden ist. Die Plattform 22 bildet somit eine Art Abschlussplatte des Gitterturms 20.

Der Übergangskörper 30 bildet eine Verbindungsstruktur bzw. eine Art Verbindungseinrichtung zwischen dem Unterteil 20 bzw. dem oberen Abschlussbereich des Unterteils 20 und dem Oberteil 40 bzw. dem unteren Anschlussbereich des Oberteils 40 aus. Hierbei sind an den Ecken bzw. oberen Enden der Eckstelle 21 Fortsetzungsverbindungsstreben (auch Hauptverbindungsstreben genannt) 31 angeordnet bzw. befestigt, die stärker nach innen (= radial) geneigt sind als die Eckstiele 21 des Unterteils 20.

Die Hauptverbindungsstreben 31 sind an ihrer Unterseite fest mit der Plattform 22 verbunden, welcher ihrerseits mit den Eckstielen 21 verbunden ist. Entsprechend der Anzahl der Eckstiele 21 sind in den Ausführungsbeispielen entsprechend viele Hauptverbindungsstreben 31 vorgesehen.

Oberhalb der Plattform 22 sind seitlich an den Hauptverbindungsstreben 31 Nebenverbindungsstreben 32 befestigt, die dauerhaft mit den Hauptverbindungsstreben 31 verbunden sind. Die Nebenverbindungsstreben 32 sind ebenfalls nach oben und innen geneigt und münden ebenfalls wie die Hauptverbindungsstreben 31 in die Unterseite des Rohrturms 40.

Durch den seitlichen Ansatz der Nebenverbindungsstreben 32 an den Hauptverbindungsstreben 31 weist der Übergangskörper 30 mehr Verbindungsstreben auf als der Gitterturm 20 Eckstiele hat. Damit ist die Anzahl der mit dem Oberteil bzw. mit dem Rohrturm verbundenen Verbindungsstreben 31, 32 größer als die Anzahl der dem Übertragungskörper zugewandten Eckstiele 21. Somit werden die Kräfte aus den Eckstielen gleichmäßig in das Oberteil verteilt.

Bei der in Fig. 1 gezeigten Ausführungsform weist das Unterteil 20 vier Eckstiele 21 auf. Der Übergangskörper 30 ist aus vier Hauptverbindungsstreben 31 und jeweils zwei Nebenverbindungsstreben 32 an jeder Hauptverbindungsstrebe 31, d.h. insgesamt aus 12 Verbindungsstreben, gebildet (vgl. Fig. 2).

Die Hauptverbindungsstreben 31 und die Nebenverbindungsstreben 32 münden an der Unterseite des Rohrturms 40 im unteren Anschlussbereich. Der Rohrturm 40 verfügt zur Verbesserung der Verbindung zwischen dem Übergangskörper 30 und dem Rohrturm 40 über eine Ringplatte 41. Die Versteifungsrippen 33 der Hauptverbindungsstreben 31 und der Nebenverbindungsstreben 32 werden beidseitig an die Rohrturmwandung und den Ringflansch angeschlossen, bevorzugt mit geschweißtem Vollanschluss. Alternativ können Schlitze in der Turmwandung vorgesehen sein, in die Versteifungsrippen eingeschoben werden.

In Fig. 2 ist in der perspektivischen Ansicht auf die Darstellung des Rohrturms 40 verzichtet worden, um die Versteifungsrippen 33 schematisch darzustellen. Vorteilhaft sind sie der Querschnittsform der Verbindungselemente angepasst. Im dargestellten Beispiel sind sie aus Rundprofilen gefertigt, die durch parabelförmigen oder, besonders vorteilhaft, geraden Schnitt diagonal geteilt wurden. Da die Verbindungselemente schräg an die Ringplatte 41 angeschlossen werden, entsteht eine ovale Verschnittlinie. Vorteilhaft werden die Versteifungsrippen 33 dieser ovalen Verschnittlinie angepasst.

Aus der perspektivischen Darstellung in Fig. 2 ist ersichtlich, dass der Querschnitt bezogen auf die Horizontale im Übergangskörper 30 von unten nach oben abnimmt. Darüber hinaus sind die Hauptverbindungsstreben 31 und Nebenverbindungsstreben 32 stärker als die Eckstiele 21 geneigt, insbesondere in radiale Richtung, d.h. nach innen in Richtung auf die Turmhochachse. Bei der gezeigten vorteilhaften Ausführung beträgt die Neigung der Hauptverbindungsstrebe zur Vertikalen mehr als 25°, insbesondere etwa 35°. Um eine einfache Montage zu erreichen, sind die unteren Anschlusspunkte der Hauptverbindungsstreben 31 an die jeweiligen Eckstiele 21 bzw. die Plattform 22 im Wesentlichen in einer horizontalen Ebene angeordnet.

Auch die oberen Anschlusspunkte der Hauptverbindungsstreben 31 und der Nebenverbindungsstreben 32 sind im Wesentlichen gleichmäßig über den runden Querschnitt des Rohrturms 40 an der Unterseite angeordnet. Für eine noch gleichmäßigere Krafteinleitung ist es vorteilhaft, die Hauptverbindungsstreben in verschiedenen horizontalen Ebenen an den Rohrturm anzuschließen. Dies erhöht natürlich die Fertigungskosten, spart dafür aber Material ein.

Im Rahmen der Erfindung ist vorgesehen, dass zwischen den Verbindungsstreben 31, 32 und dem Gitterturm 20 und/oder dem Rohrturm 40 lösbare Schraubverbindungen vorgesehen sind. Typischerweise beträgt die Höhe des Übergangskörpers 30 bei einer 5 Megawattanlage etwa drei Meter, insbesondere zwischen 2m und 8m.

In Fig. 2 ist dargestellt, dass die Nebenverbindungsstreben 32 von zwei verschiedenen, d.h. nebeneinander angeordneten Hauptverbindungsstreben 31 kommend in einem Anschlusspunkt an der Ringplatte 41 münden. Dies reduziert den Fertigungsaufwand und ist somit besonders wirtschaftlich.

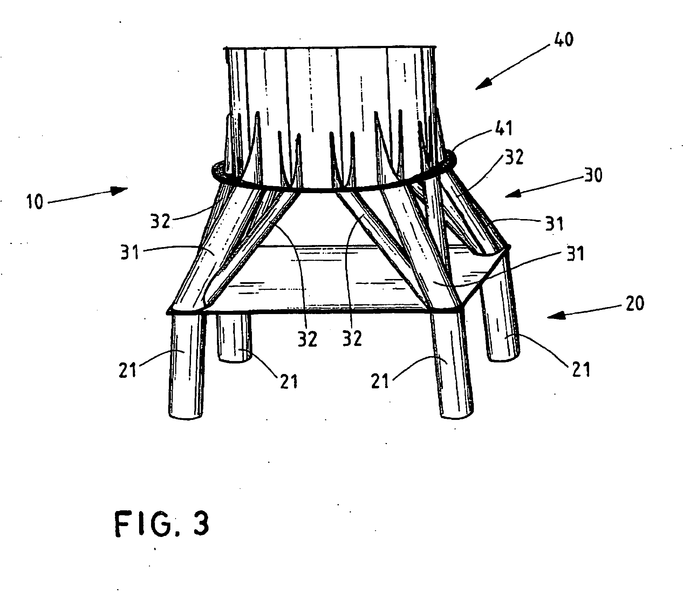

Im Ausführungsbeispiel in Fig. 3 ist dargestellt, dass jede Nebenverbindungsstrebe 32 mit der Unterseite des Rohrturms 40 verbunden ist. In diesem Beispiel sind die Anschlusspunkte der Hauptverbindungsstreben 31 und der Nebenverbindungsstreben 32 ebenfalls gleichmäßig an der Unterseite der Ringplatte 41 ringförmig angeordnet.

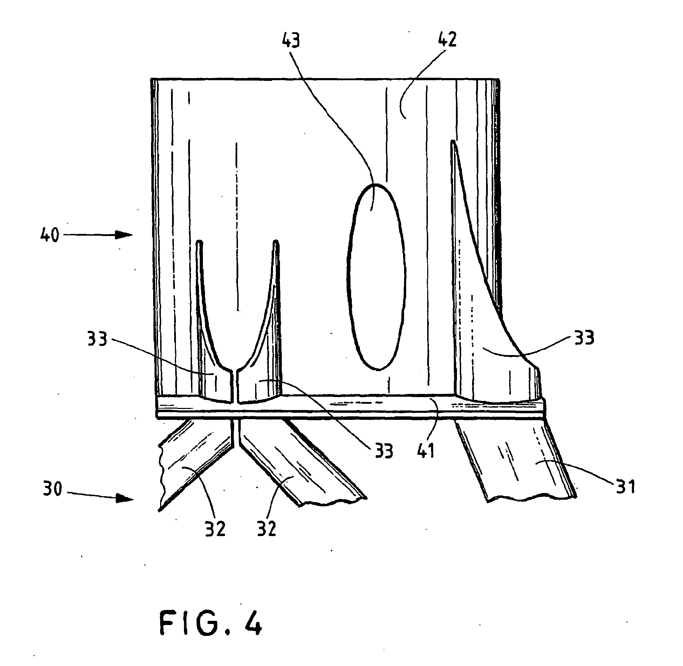

In Fig. 4 ist ein Ausschnitt eines unteren Anschlussbereichs zwischen dem Übergangskörper 30 und dem Oberteil 40 dargestellt. Es hat sich als vorteilhaft erwiesen, die Rohrturmwandung 42 im unteren Bereich mit Aussparungen, die in Fig. 4 beispielhaft mit dem Bezugszeichen 43 bezeichnet ist, zu versehen. Die runden Aussparungen 43, die als insbesondere kreisförmige, vorzugsweise ellipsenförmige Löcher (wie dargestellt) ausgebildet sind, befinden sich im Wesentlichen mittig zwischen den Anschlusspunkten der Verbindungsstreben 31, 32. Das hier gezeigte Loch 43 in der etwa 40 mm dicken Turmwandung hat eine Höhe von etwa 1m und kann vorteilhaft auch als Mannloch zur turnusmäßigen Inspizierung der außen liegenden Schweißnähte genutzt werden. Als Schutz gegen Witterungseinflüsse ist es im Normalzustand vorteilhaft mit einer Abdeckung versehen.

Weitere Aussparungen befinden sich vorteilhaft an den oberen Enden der Versteifungsrippen 33. Die dortigen Löcher sind jedoch erheblich kleiner und ebenfalls von kreisrundem oder elliptischem Querschnitt. Der Durchmesser beträgt vorteilhaft etwa 150 mm.

Bei allen gezeigten Ausführungsbeispielen erfolgt der Zugang zum Rohrturm vorteilhaft von unten. Damit wird eine nachteilige Schwächung der Turmwandung durch eine Zugangsöffnung (Turmtür) vermieden, die erheblich größer sein muss, als die oben genannten Aussparungen, um Werkzeuge und Ersatzteile in den Turm befördern zu können.

Besonders vorteilhaft kann der Raum auf der Plattform 22 für Betriebseinrichtungen einer Offshore-Windenergieanlage genutzt werden. Beispielsweise können elektrische Betriebsmittel wie Umrichter, Schaltschränke, Transformator oder Mittel- bzw. Hochspannungsschaltanlagen auf der Plattform 22 installiert sein. Als Wetterschutz ist eine einfache Verkleidung, z.B. aus Blech oder Kunststoff, insbesondere faserverstärkter Kunststoff vorteilhaft.

Alternativ können die Betriebsmittel auch in einem kleinen Container oder containerartigem Behälter installiert werden, die bei Störfällen modulartig austauschbar sind. Weiterhin kann der Raum auf der Plattform vorteilhaft als Schutz- und Ruheraum für das Wartungspersonal genutzt werden.

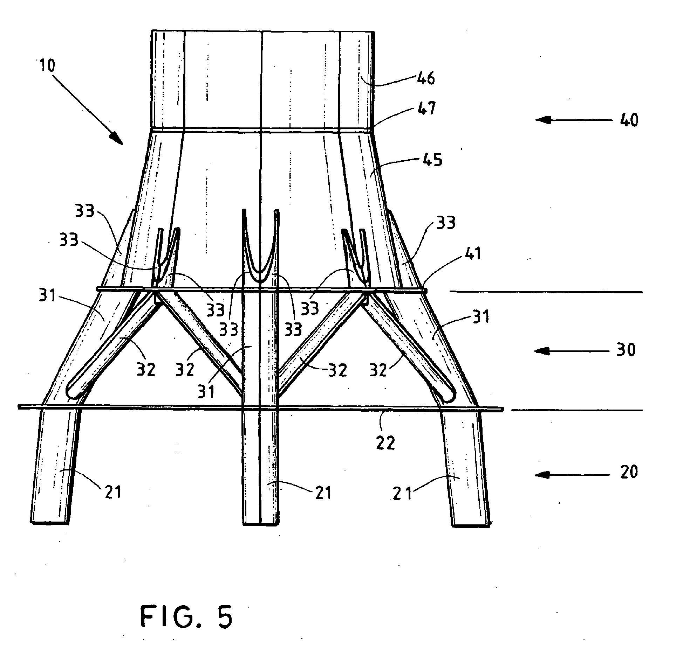

In Fig. 5 ist in einer Seitenansicht ein Ausschnitt eines weiteren erfindungsgemäßen Turms 10 einer Windkraftanlage dargestellt. Das Oberteil 40 des Turms 10 besteht dabei aus mehreren Abschnitten, wobei der untere Anschlussbereich des Oberteils 40 als Rohrturmbasiskörper 45 ausgebildet ist, auf dem der Rohrkörper 46 des Oberteils 40 angeordnet ist. Der Rohrturmbasiskörper 45, der den unteren Anschlussbereich bzw. den unteren Bereich des Oberteils 40 bildet, ist dabei fest, vorzugsweise lösbar, mit dem Rohrkörper 46 verbunden. Um den Rohrturmbasiskörper 45 und den Rohrköper 46 lösbar miteinander zu verbinden, ist zwischen dem Rohrturmbasiskörper 45 und dem Rohrkörper 46 eine Flanschverbindung 47 vorgesehen bzw. ausgebildet.

Der Rohrturmbasiskörper 45 ist nach unten, sich im Querschnitt erweiternd ausgebildet, so dass die Verbindungsstreben 31, 32 bzw. deren Versteifungsrippen 33 mit dem Rohrturmbasiskörper 45 verbunden werden. Hierbei ist die Neigung des Rohrturmbasiskörpers 45 größer als die Neigung der Außenwandung des Rohrkörpers 46 und vorzugsweise kleiner als die Neigung der Verbindungsstreben 31, 32.

Der Rohrturmbasiskörper 45 bildet somit den Übergang bzw. den Anschluss zwischen dem Übergangskörper 30 mit den Verbindungsstreben 31, 32 und dem als Schalentragwerk ausgebildeten, vorzugsweise im Querschnitt runden, Rohrkörper 46.

Der Rohrturmbasiskörper 45 und der Übergangskörper 30 können in einer weiteren Ausgestaltung als kompakte bzw. untrennbare Baueinheit oder Übergangsbaueinheit oder -stück ausgebildet sein, das bzw. die bevorzugterweise lösbar mit dem Rohrkörper 46 des Oberteils 40 bzw. dem Oberteil 40 und/oder mit dem Unterteil 20 des Turms 10 verbunden ist.

Im Rahmen der Erfindung ist der erfindungsgemäße Turm auch an Land vorteilhaft, wenn konventionelle Rohrtürme aufgrund ihrer Abmessungen nicht mehr transportierbar sind. Der Übergangskörper wird vorteilhaft einteilig transportiert, bei sehr großen Türmen kann er vorteilhaft horizontal und oder vertikal geteilt werden, um die zulässigen Transportabmessungen nicht zu überschreiten.

### Bezugszeichenliste

- 10: Turm
- 20: Unterteil (Gitterturm)
- 21: Eckstiel
- 22: Plattform
- 30: Übergangskörper
- 31: Hauptverbindungsstrebe
- 32: Nebenverbindungsstrebe
- 33: Rippenversteifung
- 40: Oberteil (Rohrturm)
- 41: Ringplatte
- 42: Rohrturmwandung
- 43: Loch
- 45: Rohrturmbasiskörper
- 46: Rohrkörper
- 47: Flanschverbindung

## Patentansprüche

1. Turm (10) einer Windkraftanlage mit einem Unterteil (20) in Form eines Gitterturms (20) mit mindestens drei Eckstielen (21) und einem Oberteil (40) in Form eines, vorzugsweise im Wesentlichen im Querschnitt runden, Rohrturms (40), wobei die Oberseite des Unterteils (20) mit dem unteren Anschlussbereich, insbesondere der Unterseite, des Oberteils (40) mittels eines Übergangskörpers (30) verbunden ist, **dadurch gekennzeichnet, dass** der Übergangskörper (30) Verbindungsstreben (31, 32) zwischen dem oberen Abschlussbereich des Unterteils (20) und dem unteren Anschlussbereich des Oberteils (40) aufweist, wobei die Verbindungsstreben (31, 32) mit dem unteren Anschlussbereich des Oberteils (40) verbunden sind und wobei die Anzahl der mit dem Oberteil (40) verbundenen Verbindungsstreben (31, 32) größer als die Anzahl der dem Übergangskörper (30) zugewandten Eckstiele (21) ist.

2. Turm nach Anspruch 1, **dadurch gekennzeichnet, dass** die Verbindungsstreben (31, 32) im Übergangsbereich eine größere Neigung in Bezug auf die Längsachse bzw. Turmhochachse des Turms als die Eckstiele des Unterteils und/oder als der Rohrturm aufweisen.

3. Turm nach Anspruch 2, **dadurch gekennzeichnet, dass** die Neigung der Verbindungsstreben (31, 32) mindestens 10° zur Turmhochachse, insbesondere mindestens 15°, beträgt.

4. Turm (10) nach einem der Ansprüche 1 bis 3, **dadurch gekennzeichnet, dass** der Übergangskörper (30) wenigstens eine Fortsetzungsverbindungsstrebe (31) aufweist, die mit einem Eckstiel (21) des Unterteils (20) verbunden ist.

5. Turm (10) nach einem der Ansprüche 1 bis 4, **dadurch gekennzeichnet, dass** wenigstens eine Querverbindungsstrebe (32) zwischen wenigstens einem Eckstiel oder einer Fortsetzungsverbindungsstrebe (31) und dem unteren Anschlussbereich des Oberteils (40) angeordnet ist.

6. Turm (10) nach einem der Ansprüche 1 bis 5, **dadurch gekennzeichnet, dass** wenigstens zwei Verbindungsstreben (31, 32) des Übergangskörpers (30) nach Art einer Verzweigung zueinander angeordnet sind.

7. Turm (10) nach einem der Ansprüche 4 bis 6, **dadurch gekennzeichnet, dass** wenigstens ein Eckstiel (21) oder eine Fortsetzungsverbindungsstrebe (31) mit wenigstens zwei Querverbindungsstreben (32) verbunden ist.

8. Turm (10) nach einem der Ansprüche 1 bis 7, **dadurch gekennzeichnet, dass** die Enden der Verbindungsstreben (31, 32) gleichmäßig am unteren Anschlussbereich des Oberteils (40) angeordnet sind.

9. Turm (10) nach einem der Ansprüche 1 bis 8, **dadurch gekennzeichnet, dass** zwei Verbindungsstreben (31, 32), insbesondere Querverbindungsstreben (32), miteinander verbunden sind.

10. Turm (10) nach einem der Ansprüche 1 bis 9, **dadurch gekennzeichnet, dass** die Verbindungsstreben (31, 32) jeweils an dem dem unteren Anschlussbereich des Oberteils (40) zugewandten Ende Versteifungsrippen (33) aufweisen.

11. Turm (10) nach einem der Ansprüche 1 bis 10, **dadurch gekennzeichnet, dass** die Verbindungsstreben (31, 32) stabförmig oder balkenförmig oder rohrförmig oder rippenförmig ausgebildet sind.

12. Turm (10) nach einem der Ansprüche 1 bis 11, **dadurch gekennzeichnet, dass** die, insbesondere horizontale, Quer-, schnittsfläche des Übergangskörpers (30) sich von der Oberseite des Unterteils (20) zum unteren Anschlussbereich des Oberteils (40) verjüngt.

13. Turm (10) nach einem der Ansprüche 1 bis 12, **dadurch gekennzeichnet, dass** das Unterteil des Oberteils (40) eine Ringplatte (41) aufweist.

14. Turm (10) nach einem der Ansprüche 1 bis 13, **dadurch gekennzeichnet, dass** der Übergangskörper (30) unterhalb der Rotorblattspitzen angeordnet ist.

15. Turm (10) nach einem der Ansprüche 1 bis 14, **dadurch gekennzeichnet, dass** oberhalb des Übergangskörpers (30) der untere Anschlussbereich des Oberteils (40) konisch oder kegelstumpfartig ausgebildet ist.

16. Turm (10) nach einem der Ansprüche 1 bis 15, **dadurch gekennzeichnet, dass** der untere Anschlussbereich des Oberteils (40) als Rohrturmbasiskörper (45) ausgebildet ist, auf dem der Rohrkörper (46) des Rohrturms (40) angeordnet ist.

17. Turm (10) nach einem der Ansprüche 1 bis 16, **dadurch gekennzeichnet, dass** der Rohrturm (40) des Oberteils (40) mindestens ein Sechstel der gesamten Turmhöhe bildet.

18. Windkraftanlage mit einem Turm (10) nach einem der Ansprüche 1 bis 17.

19. Verwendung eines Übergangskörpers (30) in einem Turm (10) einer Windkraftanlage nach einem der Ansprüche 1 bis 17.

## Claims

1. A wind turbine tower (10) with a lower portion (20) in the form of a lattice tower with at least three corner posts (21) and an upper portion (20) in the form of a tubular tower (40), preferably of substantially circular cross section, wherein the upper surface of the lower portion (20) is connected to the lower connection region, particularly the lower surface, of the upper portion (40) by means of a transition body (30), **characterised in that** the transition body (30) includes connecting struts (31, 32) between the upper end region of the lower portion (20) and the lower connecting region of the upper portion (40), wherein the connecting struts (31, 32) are connected to the lower connecting region of the upper portion (40) and wherein the number of the connecting struts (31, 32) connected to the upper portion (40) is larger than the number of the corner posts (21) directed towards the transition body (30)

2. A tower as claimed in claim 1, **characterised in that** the connecting struts (31, 32) have a larger inclination in the transition region with respect to the longitudinal axis or the vertical axis of the tower than the corner posts of the lower portion and/or than the tubular tower.

3. A tower as claimed in claim 2, **characterised in that** the inclination of the connecting struts (31, 32) is at least 10° to the vertical axis of the tower, particularly at least 15°.

4. A tower (10) as claimed in one of claims 1 to 3, **characterised in that** the transition body (30) includes at least one continuation connecting strut (31), which is connected to a corner post (21) of the lower portion (20).

5. A tower (10) as claimed in one of claims 1 to 4, **characterised in that** at least one transverse connecting strut (32) is arranged between at least one corner post or one continuation connecting strut (31) and the lower connection region of the upper portion (40).

6. A tower (10) as claimed in one of claims 1 to 5, **characterised in that** at least two connecting struts (31, 32) of the transition body (30) are arranged with respect to one another in the manner of a Y junction.

7. A tower (10) as claimed in one of claims 4 to 6, **characterised in that** at least one corner post (21) or one continuation connecting strut (31) is connected to at least two transverse connecting struts (32).

8. A tower (10) as claimed in one of claims 1 to 7, **characterised in that** the ends of the connecting struts (31, 32) are arranged uniformly on the lower connection region of the upper portion (40).

9. A tower (10) as claimed in one of claims 1 to 8, **characterised in that** two connecting struts (31, 32), particularly transverse connecting struts (32), are connected together.

10. A tower (10) as claimed in one of claims 1 to 9, **characterised in that** the connecting struts (31, 32) include respective reinforcing ribs (33) on the end directed towards the lower connection region of the upper portion (40).

11. A tower (10) as claimed in one of claims 1 to 10, **characterised in that** the connecting struts (31, 32) are of bar shaped or beam shaped or tube shaped or rib shaped construction.

12. A tower (10) as claimed in one of claims 1 to 11, **characterised in that** the, particularly horizontal, cross sectional area of the transition body (30) tapers from the upper surface of the lower portion (20) to the lower connection region of the upper portion (40).

13. A tower (10) as claimed in one of claims 1 to 12, **characterised in that** the lower portion of the upper portion (40) includes an annular plate (41).

14. A tower (10) as claimed in one of claims 1 to 13, **characterised in that** the transition body (30) is arranged below the rotor blade tips.

15. A tower (10) as claimed in one of claims 1 to 14, **characterised in that** above the transition body (30) the lower connection region of the upper portion (40) is of conical or frustoconical construction.

16. A tower (10) as claimed in one of claims 1 to 15, **characterised in that** the lower connection region of the upper portion (40) is constructed in the form of a tubular tower base body (45), on which the tubular body (46) of the tubular tower (40) is disposed.

17. A tower (10) as claimed in one of claims 1 to 16, **characterised in that** the tubular tower (40) of the upper portion (40) constitutes at least one sixth of the entire height of the tower.

18. A wind turbine installation with a tower (10) as claimed in one of claims 1 to 17.

19. The use of a transition body (30) in a tower (10) of a wind turbine installation as claimed in one of claims 1 to 17.

## Revendications

1. Tour (10) d'éolienne équipée d'une portion inférieure (20) sous la forme d'une tour en treillis (20) comprenant au moins trois poteaux d'angle (21), et d'une portion supérieure (40) sous la forme d'une tour tubulaire (40), de préférence à section substantiellement circulaire, la partie supérieure de la portion inférieure (20) étant reliée à la zone de raccordement inférieure, en particulier à la partie inférieure, de la portion supérieure (40) au moyen d'un corps de jonction (30), **caractérisée en ce que** le corps de jonction (30) comprend des traverses de liaison (31, 32) entre la zone de raccordement supérieure de la portion inférieure (20) et la zone de raccordement inférieure de la portion supérieure (40), les traverses de liaison (31, 32) étant reliées à la zone de raccordement inférieure de la portion supérieure (40) et le nombre de traverses de liaison (31, 32) reliées à la portion supérieure (40) étant supérieur au nombre de poteaux d'angle (21) affectés au corps de jonction (30)

2. Tour selon la revendication 1, **caractérisée en ce que** les traverses de liaison (31, 32), dans la zone de jonction, présentent un angle d'inclinaison plus marqué par rapport à l'axe longitudinal et / ou à l'axe vertical de la tour que les poteaux d'angle de la portion inférieure et / ou que la tour tubulaire.

3. Tour selon la revendication 2, **caractérisée en ce que** l'angle d'inclinaison des traverses de liaison (31, 32) est au moins de 10° par rapport à l'axe vertical de la tour, plus particulièrement d'au moins 15°.

4. Tour (10) selon l'une des revendications 1 à 3, **caractérisée en ce que** le corps de jonction (30) comprend au moins une traverse de liaison d'extension (31), qui est relié à un poteau d'angle (21) de la portion inférieure (20).

5. Tour (10) selon l'une des revendications 1 à 4, **caractérisée en ce qu'**au moins une traverse de liaison transversale (32) est agencée entre au moins un poteau d'angle ou une traverse de liaison d'extension (31) et la zone de raccordement inférieure de la portion supérieure (40).

6. Tour (10) selon l'une des revendications 1 à 5, **caractérisée en ce qu'**au moins deux traverses de liaison (31, 32) du corps de jonction (30) sont agencées de manière ramifiée l'une par rapport à l'autre.

7. Tour (10) selon l'une des revendications 4 à 6, **caractérisée en ce qu'**au moins un poteau d'angle (21) ou une traverse de liaison d'extension (31) est relié(e) à au moins deux traverses de liaison transversales (32).

8. Tour (10) selon l'une des revendications 1 à 7, **caractérisée en ce que** les extrémités des traverses de liaison (31, 32) sont agencées de manière uniforme sur zone de raccordement inférieure de la portion supérieure (40).

9. Tour (10) selon l'une des revendications 1 à 8, **caractérisée en ce que** deux traverses de liaison (31, 32), en particulier des traverses de liaison transversales (32), sont reliées l'une à l'autre.

10. Tour (10) selon l'une des revendications 1 à 9, **caractérisée en ce que** les traverses de liaison (31, 32) comprennent chacune des nervures de renfort (33) au niveau de la zone de raccordement inférieure de la portion supérieure (40).

11. Tour (10) selon l'une des revendications 1 à 10, **caractérisée en ce que** les traverses de liaison (31, 32) sont en forme de tige, ou en forme de barre, ou tubulaire ou nervurée.

12. Tour (10) selon l'une des revendications 1 à 11, **caractérisée en ce que** la surface transversale, en particulier horizontale, du corps de jonction (30), va en diminuant de la partie supérieure de la portion inférieure (20) à la zone de raccordement inférieure de la portion supérieure (40).

13. Tour (10) selon l'une des revendications 1 à 12, **caractérisée en ce que** la zone de raccordement inférieure de la portion supérieure (40) comprend une plaque annulaire (41).

14. Tour (10) selon l'une des revendications 1 à 13, **caractérisée en ce que** le corps de jonction (30) est agencé sous les pales du rotor.

15. Tour (10) selon l'une des revendications 1 à 14, **caractérisée en ce que** la zone de raccordement inférieure de la portion supérieure (40) est de forme conique ou tronconique au dessus du corps de jonction (30).

16. Tour (10) selon la revendication 1 à 15, **caractérisée en ce que** la zone de raccordement inférieure de la portion supérieure (40) forme la base de la tour tubulaire (45), sur laquelle le corps tubulaire (46) de la tour tubulaire (40) est agencé.

17. Tour (10) selon l'une des revendications 1 à 16, **caractérisé en ce que** la tour tubulaire (40) de la portion supérieure (40) forme au moins un sixième de la hauteur totale de la tour.

18. Éolienne comprenant une tour (10) selon l'une des revendications 1 à 17.

19. Utilisation d'un corps de jonction (30) dans une tour (10) d'éolienne selon l'une des revendications 1 à 17.
